# EUROPÄISCHE PATENTANMELDUNG

(11) **EP 1 719 984 A1**
(43) Veröffentlichungstag der Anmeldung: **08.11.2006**
(21) Anmeldenummer: 06113451.6
(22) Anmeldetag: 03.05.2006
(51) Int. Cl.: G01F 23/20, G01F 23/26

(54) **Vorrichtung zur Kontrolle der Flüssigkeitsentnahme aus einem Trinkgefäß**

(30) Priorität: 03.05.2005 DE 102005021019
(71) Anmelder: Districare OHG, 51645 Gummersbach (DE)
(72) Erfinder: Röttger, Hasso, 51645 Gummersbach (DE)
(74) Vertreter: Kayser, Martin

(57) **Zusammenfassung**

Die vorliegende Erfindung betrifft eine Vorrichtung (20) zur Kontrolle der Flüssigkeitsentnahme aus einem Flüssigkeitsbehälter (22) zur Überwachung der Flüssigkeitsaufnahme eines Lebewesens über einen Zeitraum. Die Vorrichtung weist auf:
- eine Messvorrichtung zur Messung der im Flüssigkeitsbehälter (22) befindlichen Flüssigkeitsmenge,
- eine Zeiterfassungsvorrichtung,
- einen Datenspeicher mit gespeicherten Sollwerten, die jeweils eine Flüssigkeitsmenge repräsentieren,
- eine Auswertevorrichtung (40), die Istwerte ermittelt, die die entnommene Flüssigkeit über definierte Zeitintervalle repräsentieren, und diese mit den Sollwerten vergleicht,
- eine Signalvorrichtung (48) zur Anzeige des Ergebnisses aus dem Vergleich der Istwerte mit den Sollwerten.

## Beschreibung

Die vorliegende Erfindung betrifft eine Vorrichtung zur Kontrolle der Flüssigkeitsentnahme aus einem Trinkgefäß.

Es ist allgemein bekannt, dass regelmäßige und ausreichende Flüssigkeitsaufnahme eine Grundvoraussetzung für Vitalität, Gesundheit und Wohlbefinden ist. Ein verringertes Durstgefühl oder falsch erlernte Trinkgewohnheiten können auf Dauer zu einer Beeinträchtigung der geistigen und körperlichen Leistungsfähigkeit führen. In Einzelfällen kann es sogar zu behandlungsnotwendigen und gefährlichen Dehydrierungszuständen kommen. Dies gilt grundsätzlich für alle Lebewesen, die Erfindung wird jedoch im Folgenden am Beispiel des Menschen erläutert.

Die wenigsten Menschen trinken über den Tag ausreichend Flüssigkeit. Viele Menschen trinken erst dann, wenn sich ein gewisses Durstgefühl eingestellt hat. Dies ist jedoch insofern fatal, weil das Durstgefühl bereits eine Unterversorgung mit Flüssigkeit signalisiert. Vernünftigerweise sollte besser derart regelmäßig getrunken werden, so dass sich dieses Durstgefühl erst gar nicht einstellt. Das Problem der mangelnden Flüssigkeitsaufnahme ist sowohl bei jungen und gesunden Menschen, als auch bei älteren und kranken Menschen in gleichem Maße vorhanden.

Um das Problem zu lösen, sind verschiedene Methoden bekannt. Beispielsweise wird angeraten, eine bestimmte Flüssigkeitsmenge, beispielsweise 2 Liter Wasser, morgens bereit zu stellen und über den Tag zu trinken. Die Kontrolle der tatsächlich aufgenommenen Flüssigkeitsmenge ist dann abends ohne weiteres anhand der ganz oder nur teilweise geleerten Flaschen oder Behälter möglich.

Auch wird empfohlen, bestimmte Flüssigkeitsmengen in bestimmten, zuvor festgelegten Zeitabständen zu sich zu nehmen. Beispielsweise wird empfohlen, jede Stunde ein Glas Flüssigkeit, insbesondere Wasser zu trinken. Wird dieser Rhythmus eingehalten, ist ebenfalls eine ausreichende Flüssigkeitsaufnahme gewährleistet.

Nachteilig bei dem bekannten Verfahren ist jedoch, dass diese nur dann funktionieren, wenn über den Tag die notwendige Disziplin gegeben ist. Wird das Trinken vergessen, helfen die beiden Verfahren über den Tag nicht. Lediglich kann erreicht werden, dass möglicherweise abends über eine erhöhte Flüssigkeitsaufnahme der Mangel ausgeglichen wird. Ein solcher Ausgleich ist aber nicht zielführend, da der Körper bereits in einem unterversorgten Zustand war.

Die Aufgabe der vorliegenden Erfindung besteht deshalb darin, ein Trinkgefäß zu schaffen, dass die Aufnahme ausreichender Flüssigkeit für einen bestimmten Zeitraum beispielsweise während der Wachphase eines Tages, erleichtert. Mit Hilfe des Trinkgefässes soll insbesondere vermieden werden, dass das Trinken vergessen wird, es soll gewährleistet sein, dass die minimal aufzunehmende Flüssigkeit auch tatsächlich getrunken wird.

Erfindungsgemäß wird die Aufgabe durch Vorrichtung zur Kontrolle der Flüssigkeitsentnahme aus einem Flüssigkeitsbehälter zur Überwachung der Flüssigkeitsaufnahme eines Lebewesens über einen Zeitraum gelöst, mit
- einer Messvorrichtung zur Messung der im Flüssigkeitsbehälter befindlichen Flüssigkeitsmenge,
- einer Zeiterfassungsvorrichtung,
- einem Datenspeicher mit gespeicherten Sollwerten, die jeweils eine Flüssigkeitsmenge repräsentieren,
- einer Auswertevorrichtung, die Istwerte ermittelt, die die entnommene Flüssigkeit über definierte Zeitintervalle repräsentieren, und diese mit den Sollwerten vergleicht,
- einer Signalvorrichtung zur Anzeige des Ergebnisses aus dem Vergleich der Istwerte mit den Sollwerten.

Die Erfindung wird im Folgenden anhand einer Flasche erläutert, sie soll jedoch nicht auf diese Art Trinkgefäß beschränkt sein.

Gemäß der Erfindung wird also die in dem Flüssigkeitsbehälter befindliche Flüssigkeit mit Hilfe einer Messvorrichtung kontinuierlich oder in vorgegebenen Zeitintervallen gemessen. Bei einer ausreichenden und regelmäßigen Flüssigkeitsaufnahme sollte die Flüssigkeitsmenge innerhalb des Flüssigkeitsbehälters regelmäßig abnehmen.

Die Auswertvorrichtung vergleicht die von der Messvorrichtung gemessenen Werte und vergleicht diese mit Sollwerten, die durch den Benutzer erreicht werden sollen.

Stellt sich bei der jeweiligen Messung heraus, dass der zu erreichende Wert nicht eingehalten wurde, wird ein Signal erzeugt, dass dem Benutzer des Trinkgefässes signalisiert, dass er nicht ausreichend Flüssigkeit zu sich genommen hat. Vorzugsweise handelt es sich dabei um ein optisches oder akustisches Signal, es sind jedoch je nach Anwendungsfall auch andere Signalarten, beispielsweise sensorische Signale für blinde und/oder taube Menschen denkbar.

Die Messvorrichtung und die Auswertvorrichtung können sich in einem Bodenelement befinden, in dass die Flasche eingestellt wird. Das Trinkgefäß bzw. die Flasche kann vorteilhafterweise auch über ein Schraubgewinde mit wenigen Umdrehungen in das Bodenelement einschraubbar sein. Alternativ kann das Bodenelement aber auch fest mit der Flasche oder dem Trinkgefäß verbunden sein.

Sobald das Trinkgefäß signalisiert, dass ein Flüssigkeitsdefizit besteht, ist es durch die Benutzung möglich, den Alarm durch beispielsweise durch einen Knopfdruck zu quittieren. Bei der darauf folgenden Messung wird die Differenz zwischen der Messung, die den Alarm ausgelöst hatte und der aktuellen Messung berücksichtigt.

In einer besonders vorteilhaften Ausführungsvariante wird durch ein Signal bestätigt, dass ausreichend Flüssigkeit entnommen wurde. Beispielsweise ist denkbar, das Trinkgefäß eine LED-Anzeige aufweist, die von grün über orange in Rot übergeht. Solange ausreichend Flüssigkeit aufgenommen wird, leuchtet eine grüne Signallampe, wurde zuwenig Flüssigkeit aufgenommen leuchtet die Anzeige orange und bei deutlicher Unterschreitung der aufzunehmenden Flüssigkeitsmenge schließlich rot. Bei Unterschreiten der aufzunehmenden Flüssigkeitsmenge kann diese Signalanzeige durch ein akustisches Signal unterstützt werden.

Die Sollwerte können direkt in das Trinkgefäß eingegeben werden oder sie können durch Eingabe der wesentlichen Parameter durch die Auswertevorrichtung oder ein weiteres Modul ermittelt werden.

Grundsätzlich kann die Auswertung auf Basis verschiedener Sollwerte erfolgen. In einer ersten Ausführungsvariante wird beispielsweise ein Sollwert je Stunde ermittelt und mit dem Istwert verglichen, der jeweils die Differenz zwischen der maximal in dem Flüssigkeitsbehälter befindlichen Flüssigkeit und der zum Zeitpunkt der Messung zu erwartenden Flüssigkeit darstellt. Beispielsweise könnte der Sollwert nach 1 Stunde 200 ml betragen, nach 2 Stunden 400 ml usw. Auch ist denkbar, dass sich der Sollwert jeweils aus der Differenz zwischen dem letzten gemessenen Wert und dem aktuell gemessenen Wert ergibt. Schließlich ist auch eine Kombination von Sollwerten denkbar, nämlich dass sowohl ein absoluter Wert auf Basis der Differenz zwischen der maximalen Flüssigkeitsmenge und der aktuellen Flüssigkeitsmenge, als auch die Differenz zwischen den beiden letzten gemessenen Werten bestimmt wird. Dadurch kann berücksichtigt werden, ob beispielsweise zu einem bestimmten Zeitpunkt über die Maßen getrunken und daraufhin zu einem späteren Zeitpunkt weniger getrunken wurde.

Hat die Signalvorrichtung angezeigt, dass eine Flüssigkeitsunterversorgung vorliegt, ist es vorteilhafterweise möglich, die Signalvorrichtung lediglich durch Entnahme von Flüssigkeit aus dem Flüssigkeitsbehälter automatisch zurückzusetzen. Die Auswertevorrichtung kann zu diesem Zweck beispielsweise durch einen zusätzlichen Knopf nach dem Trinken aktiviert werden, so dass ein Wert außerhalb der regelmäßigen Messreihe ermittelt wird. Dieser kann dann dazu führen, dass die Signalvorrichtung wieder in den unkritischen oder grünen Bereich zurückgesetzt wird.

Die Größe des Trinkgefässes ist beliebig wählbar, vorzugsweise weist sie aber diejenige Größe auf, die geeignet ist, die gesamte über den entsprechenden Zeitraum aufzunehmende Flüssigkeit zu beinhalten. Möglich ist aber auch, dass die Gesamtmenge im Datenspeicher abgelegt ist und die Auswerteeinheit ein Wiederauffüllen des Flüssigkeitsbehälters berücksichtigt. Bei kleineren Gefäßen ist vorteilhafterweise eine Messvorrichtung vorgesehen, die ein Minimumlevel innerhalb des Flüssigkeitsbehälters registriert und durch einen entsprechenden Signalton auf das Wiederauffüllen des Flüssigkeitsbehälters aufmerksam gemacht. Vorzugsweise wird als Zeitraum die Wachzeit des Menschen, also vom morgendlichen Aufstehen bis zum abendlichen Zubettgehen gewählt. Am darauf folgenden Tag wird die Auswertevorrichtung zurückgesetzt, so dass die Kontrolle des folgenden Tages möglich ist.

Als Messvorrichtung für die Messung der Flüssigkeitsmenge im Flüssigkeitsbehälter hat sich eine im Boden des Flüssigkeitsbehälters angeordnete Waage als besonders geeignet erwiesen. Die Waage wird mit der Masse der Flüssigkeit beaufschlagt und registriert somit eine Zu- oder Abnahme der Flüssigkeit. Alternativ kann die Waage auch im Bodenelement angeordnet sein, sie misst dann die Gesamtmasse des Trinkgefäßes mit der Flüssigkeit, wobei das Eigengewicht des Trinkgefäßes anschließend für die Auswertung herausgerechnet wird.

Grundsätzlich sind aber auch andere Messvorrichtungen geeignet. Wesentlich ist nur, dass die im Flüssigkeitsbehälter befindliche Menge an Flüssigkeit zuverlässig bestimmbar ist. Insbesondere wäre auch ein kapazitiver Messfühler geeignet, der ein Dielektrikum innerhalb des Flüssigkeitsbehälters als Messgröße nutzt.

Die Auswertungsvorrichtung ist vorzugsweise eine prozessorgesteuerte Kontroll- und/oder Dokumentationsvorrichtung. Diese kann vorzugsweise auf Parametertabellen zurückgreifen, in denen individuelle Faktoren wie Gewicht, Geschlecht, Alter, Leistungslevel und andere Parameter, die den Flüssigkeitshaushalt des Benutzers beeinflussen, enthalten sind. Diese individuellen Faktoren können über eine Dateneingabevorrichtung, beispielsweise eine Knopfbedienung am Trinkgefäß, eingegeben und geändert werden. Möglich ist auch, dass das Trinkgefäß eine Schnittstelle bzw. einen Anschluss zur Verbindung mit einem Computer aufweist. Denkbar sind kabelgebundene und kabellose Verbindungen wie beispielsweise USB oder Bluetooth. Über diese Schnittstelle können dann entsprechende Parameter des Benutzers eingegeben werden, es können aber auch die von der Messvorrichtung gemessenen Mengen und die von der Auswertevorrichtung ermittelten Werte ausgelesen und an den PC übertragen werden. Mit Hilfe geeigneter Computerprogramme ist dann eine aussagekräftige und individuelle Auswertung auch über längere Zeiträume möglich. Anstelle des Computers sind auch andere geeignete Geräte wie PDA's, Handys oder ähnliches einsetzbar.

Weiterhin ist vorzugsweise eine Reset-Möglichkeit vorgesehen, mit der alle eingegebenen Parameter und ggf. auch die gespeicherten Flüssigkeitsmengen und Auswerteergebnisse gelöscht werden können. Denkbar ist eine zweistufige Resetfunktion, die in einem ersten Schritt lediglich die Auswerteergebnisse und in einem weiteren Schritt sämtliche gespeicherten Werte löscht. Dies ist deshalb vorteilhaft, weil das Trinkgefäß üblicherweise morgens gefüllt wird und die Trinkkontrolle ab dann beginnen soll. Insofern ist wichtig, dass die am zuvorige Tag ermittelten Werte keinen Einfluss auf den neuen Zeitraum haben. Es kann Reset-Knopf am Trinkgefäß oder auch eine Software-Lösung realisiert sein.

Die Energieversorgung des Trinkgefässes kann durch jegliche geeignete Energiequelle erfolgen. Besonders geeignet sind Batterien oder Akkumulatoren, es ist aber auch ein Anschluss an das öffentliche Stromnetz über übliche Kabel denkbar. Auch ist die Verwendung von Solarzellen möglich und vorteilhaft.

In einer besonders vorteilhaften Ausführungsvariante weist der Flüssigkeitsschalter Anschlüsse für eine externe so genannte Docking-Station auf, über die ein Datenaustausch mit einem externen Computer erfolgen kann. Die Energiequelle kann dem Flüssigkeitsbehälter oder der Docking-Station zugeordnet sein.

Um die Mobilität des Benutzers weiterhin zu steigern, ist die Signalvorrichtung derart ausgeführt, dass sie per Funk Signale an einen Empfänger sendet. Als Empfänger eignen sich beispielsweise ein Handy des Benutzers, ein Armband, ein Schlüsselanhänger oder ähnliches. Diese signalisieren dem Benutzer rechtzeitig, dass er Flüssigkeit zu sich nehmen und ggf. zur Flasche zurückkehren muss.

Die Häufigkeit der Messung der in dem Flüssigkeitsbehälter vorhandenen Flüssigkeit ist frei wählbar, es bieten sich jedoch Intervalle im minuten- oder halbstündigen Bereich an.

Anhand der nachfolgenden Figur wird die Erfindung näher erläutert.

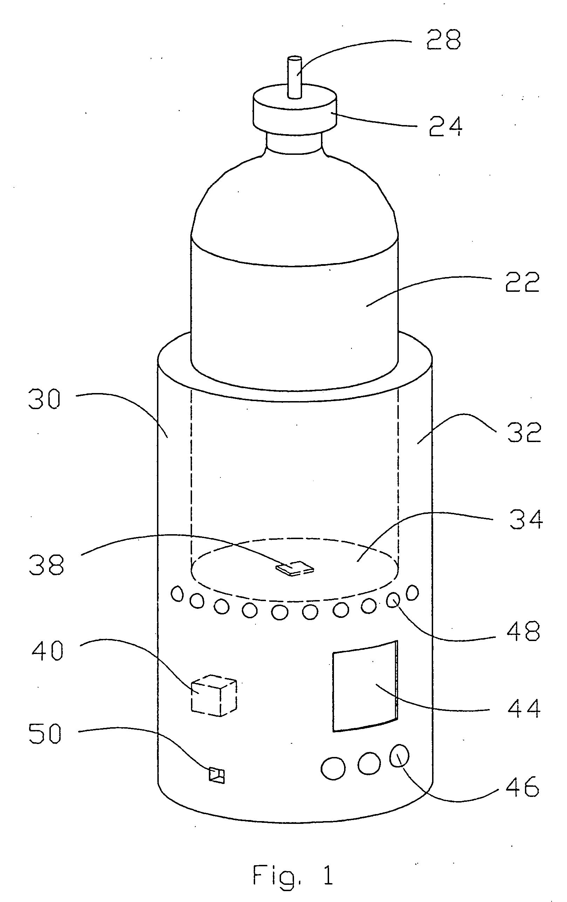

Die einzige Figur 1 zeigt eine erfindungsgemäße Vorrichtung 20, die einen Flüssigkeitsbehälter 22 aufweist, der mit einem Deckel 24 verschließbar ist. Der Deckel 24 ist im gezeigten Ausführungsbeispiel über ein Gewinde auf die Flasche aufschraubbar und weist weiterhin eine aus dem Deckel 24 hervortretende separat verschließbare Trinköffnung 28 auf. Die gezeigte Ausbildung als Trinkflasche ist nur beispielhaft zu verstehen, denkbar sind auch alle anderen Formen von Behältern, die Flüssigkeit beinhalten können.

Der Flüssigkeitsbehälter 22 ist in ein Bodenelement 30 einsetzbar. Das Bodenelement 30 ist im vorliegenden Ausführungsbeispiel becherartig, wobei der innere Durchmesser des Bodenelementes 30 derart ausgeführt ist, dass der Flüssigkeitsbehälter 22 in diesen Becher einstellbar ist und in diesem über eine Seitenwand 32 seitlich gehalten wird. Dabei setzt ein Boden 34 des Flüssigkeitsbehälters 22 auf einem Innenboden des Bodenelementes 30 auf.

Im Innenboden des Bodenelementes 30 ist vorzugsweise eine hochsensible Waage 38 angeordnet, die durch den eingesetzten Flüssigkeitsbehälter 22 belastet wird. Dementsprechend misst die Waage 38 die Masse des Flüssigkeitsbehälters 22 und registriert darüber, wie viel Flüssigkeit sich im Flüssigkeitsbehälter 22 befindet. Die Waage 38 ist mit einer lediglich symbolisch dargestellten Auswertvorrichtung 40 verbunden, die vorzugsweise prozessorgesteuert ist. Die durch die Waage 38 gemessenen Werte werden an die Auswertevorrichtung 40 übermittelt. Die Auswertevorrichtung 40 beinhaltet eine Zeiterfassungsvorrichtung, letztere kann aber auch als eigenständiges Modul ausgeführt sein. Das Gleiche gilt für einen Datenspeicher, auch dieser ist im vorliegenden Ausführungsbeispiel in die Auswertevorrichtung 40 integriert, kann aber auch eigenständiges Modul ausgeführt sein.

Anstelle des becherförmigen Bodenelementes 30 ist auch jede andere Art der Halterung geeignet, die eine Belastung der Waage 38 durch den Flüssigkeitsbehälter 22 gewährleistet.

Weiterhin ist eine Dateneingabevorrichtung im Bodenelement 30 angeordnet, über die für die Bestimmung des Flüssigkeitsbedarfes notwendige Parameter eingegeben werden können. Die ebenfalls nur symbolisch dargestellte Dateneingabevorrichtung 42 kann ein Display 44 aufweisen und über Eingabeknöpfe 46 betätigbar sein. Es bietet sich ein Softwareprogramm an, das die Eingabe der notwendigen Parameter über nur wenige Eingabeknöpfe 46 ermöglicht. Auch ist eine Dateneingabe direkt über das Display 44, das dann auch als vollständige Dateneingabevorrichtung fungiert, denkbar. Die Dateneingabevorrichtung ist mit der Auswertevorrichtung 40 verbunden.

Es ist eine Signalvorrichtung 48 vorgesehen, die im vorliegenden Ausführungsbeispiel durch LED's realisiert wird. Diese werden ebenfalls von der Auswertevorrichtung 40 angesteuert und zeigen den aktuellen Status der Versorgung mit Flüssigkeit an. Die Information kann dabei beispielsweise durch die Anzahl der aufleuchtenden LED's angegeben werden, es ist aber auch denkbar, dass die LED's von grün über orange nach rot wechseln.

Eine Schnittstelle 50, über die die Vorrichtung 20 mit einem externen Gerät, beispielsweise einem Computer verbindbar ist, symbolisch dargestellt. Die Auswertevorrichtung 40 kann dann über die Schnittstelle 50 mit dem entsprechenden Gerät verbunden werden, wodurch Daten in beide Richtungen austauschbar sind. Alternativ oder zusätzlich ist auch eine Datenübertragung per Funk möglich.

Die Energieversorgung der Vorrichtung 20 kann entweder über Batterien oder Akkumulatoren erfolgen, es ist aber auch eine Versorgung über ein öffentliches Stromnetz möglich. Ist letzteres der Fall, ist ein entsprechendes Kabel mit einem geeigneten Stecker mit dem Bodenelement 30 verbunden.

Der Vorteil der Verwendung eines externen Bodenelementes 30 mit der Waage 38 und allen elektronischen Bauteilen besteht unter anderem darin, dass der Flüssigkeitsbehälter 22, der keine sensiblen Bauteile aufweist, problemlos gespült und auch erhöhten Belastungen ausgesetzt werden kann.

Die vorliegende Erfindung ist nicht auf die beschriebenen Ausführungsbeispiele, insbesondere nicht auf das in der Figur 1 gezeigte Ausführungsbeispiel beschränkt, sondern umfasst vielmehr alle im Sinne der Erfindung gleichwirkenden Ausführungsformen. Insbesondere ist auch eine Vorrichtung 20 denkbar, bei der der Flüssigkeitsbehälter 22 selbst alle Funktionen des Bodenelementes 30 beinhaltet. Auf ein externes Bodenelement 30 kann dann verzichtet werden. In diesem Fall kann es sinnvoll sein, wenn der Flüssigkeitsbehälter 22 über beispielsweise ein Gewinde mit einer Einheit lösbar verbunden ist, die die übrigen Komponenten aufweist. Die Waage 38 wäre in diesem Fall Bestandteil des Flüssigkeitsbehälters 22.

Die erfindungsgemäße Vorrichtung 20 eignet sich zum einen für eine Kontrolle des täglichen Flüssigkeitsbedarfs einer Durchschnittsperson, sie ist aber insbesondere auch für die Kontrolle einer Flüssigkeitsaufnahme von kranken oder alten Menschen geeignet, denen es schwer fällt, an die regelmäßige Flüssigkeitsaufnahme zu denken. Auch kann die Versorgung von Tieren durch einen Menschen erleichtert werden. Gerade bei Tieren besteht das Problem, dass diese ein Durstgefühl nicht signalisieren können, so dass eine regelmäßige Versorgung mit Flüssigkeit durch den betreuenden Menschen gewährleistet sein muss. In diesem Fall kann die Vorrichtung 20 helfen, Unregelmäßigkeiten im Trinkverhalten der Tiere zu ermitteln bzw. den Menschen darauf aufmerksam zu machen, dass der Flüssigkeitsbehälter 22 leer ist.

## Patentansprüche

1. Vorrichtung (20) zur Kontrolle der Flüssigkeitsentnahme aus einem Flüssigkeitsbehälter (22) zur Überwachung der Flüssigkeitsaufnahme eines Lebewesens über einen Zeitraum, mit
- einer Messvorrichtung zur Messung der im Flüssigkeitsbehälter (22) befindlichen Flüssigkeitsmenge,
- einer Zeiterfassungsvorrichtung,
- einem Datenspeicher mit gespeicherten Sollwerten, die jeweils eine Flüssigkeitsmenge repräsentieren,
- einer Auswertevorrichtung (40), die Istwerte ermittelt, die die entnommene Flüssigkeit über definierte Zeitintervalle repräsentieren, und diese mit den Sollwerten vergleicht,
- einer Signalvorrichtung (48) zur Anzeige des Ergebnisses aus dem Vergleich der Istwerte mit den Sollwerten.

2. Vorrichtung (20) nach Anspruch 1, gebildet durch ein Bodenelement (30), in das der Flüssigkeitsbehälter (22) einstellbar ist..

3. Vorrichtung (20) nach Anspruch 1 oder Anspruch 2, **dadurch gekennzeichnet, dass** die Messvorrichtung durch eine Waage (38) gebildet ist.

4. Vorrichtung (20) nach einem der Ansprüche 1 bis 3, **dadurch gekennzeichnet, dass** die Signalvorrichtung (48) durch eine visuelle Anzeige gebildet ist.

5. Vorrichtung (20) nach einem der Ansprüche 1 bis 4, **dadurch gekennzeichnet, dass** eine Schnittstelle (50) für eine Verbindung mit einem weiteren elektronischen Gerät vorgesehen ist.

6. Vorrichtung (20) nach einem der Ansprüche 1 bis 5, **dadurch gekennzeichnet, dass** die Schnittstelle (50) als USB-Schnittstelle ausgeführt ist.

7. Vorrichtung (20) nach einem der Ansprüche 1 bis 6, **dadurch gekennzeichnet, dass** die Sollwerte, die Istwerte und alle weiteren durch die Auswertevorrichtung (40) ermittelten Werte per Funk an ein weiteres elektronisches Gerät übertragbar sind.

8. Vorrichtung (20) nach einem der Ansprüche 1 bis 7, **dadurch gekennzeichnet, dass** der Flüssigkeitsbehälter (22) fest mit dem Bodenelement (30) verbunden ist.

9. Vorrichtung (20) nach einem der Ansprüche 1 bis 8, **dadurch gekennzeichnet, dass** die Dateneingabevorrichtung (42) ein Display (44) und Eingabeknöpfe (46) aufweist.

10. Vorrichtung (20) nach einem der Ansprüche 1 bis 9, **dadurch gekennzeichnet, dass** die Dateneingabevorrichtung (42) ein Display (44) aufweist, über das Daten eingegeben werden können.
